# EUROPÄISCHE PATENTANMELDUNG

(11) **EP 4 167 346 A1**
(43) Veröffentlichungstag der Anmeldung: **19.04.2023**
(21) Anmeldenummer: 22197756.4
(22) Anmeldetag: 26.09.2022
(51) Int. Cl.: H01M 10/60, H01M 10/625, H01M 10/6556

(54) **MODULAR AUFGEBAUTES KÜHLLEITUNGSSYSTEM, INSBESONDERE FÜR BATTERIEN VON E-FAHRZEUGEN**

(30) Priorität: 12.10.2021 DE 102021126428
(71) Anmelder: Witzenmann GmbH, 75175 Pforzheim (DE)
(72) Erfinder: Bessler, Frank, 75446 Wiernsheim (DE); Dias-Assis, Ricardo Andre, 75015 Bretten (DE); Drouart, Nicolas, 75331 Grunbach (DE); Joguet, Antoine, 75177 Pforzheim (DE); Ritter, Maximilian, 75339 Höfen an der Enz (DE)
(74) Vertreter: LBP Lemcke, Brommer & Partner Patentanwälte mbB

(57) **Zusammenfassung**

Beschrieben wird ein modular aufgebautes Kühlleitungssystem (10), insbesondere für Batterien von E-Fahrzeugen, umfassend: wenigstens ein rohrförmiges Verbindungselement (11) aus einem ersten Metall; und wenigstens zwei rohrförmige oder schlauchförmige Leitungselemente (15, 16) aus einem zweiten Metall, welche Leitungselemente (15, 16) mittels des Verbindungselements (11) verbunden oder verbindbar sind, oder wenigstens ein solches Leitungselement (15, 16), das mittels des Verbindungselements (11) mit einem zu kühlenden Funktionsmodul, vorzugsweise einer Batterie, verbindbar ist.

## Beschreibung

Die Erfindung betrifft ein Modular aufgebautes Kühlleitungssystem, insbesondere für Batterien von E-Fahrzeugen gemäß Anspruch 1.

Kühlleitungen, insbesondere für Batterien von E-Fahrzeugen, sind heutzutage meistens in Kunststoff und aus einem Stück hergestellt.

Aufgrund der einstückigen Ausgestaltung sind derartige Kühlleitungen in ihrer Verwendung stark eingeschränkt und regelmäßig nur bei einem einzigen Fahrzeugtyp einsetzbar. Außerdem leiden derartige Kühlleitungen an mangelnder Skalierbarkeit, was insbesondere deshalb von Nachteil ist, weil die Hersteller vermehrt dazu übergehen, Batterien herzustellen, die aus mehreren gleichen Einzelmodulen bestehen und je nach Leistungsbedarf des Fahrzeugs skaliert werden.

Darüber hinaus sind Kunststoffe nur in gewissen Grenzen hitzebeständig. Es ist absehbar, dass zukünftig eine lange Hitzebeständigkeit für derartige Kühlleitungen gefordert werden könnte. Beispielsweise sieht die Norm EU NORM ECE R100.02: "fire resistance test" vor, dass Batteriemodule, die weniger als 1,5 m vom Boden entfernt sind, 70 Sekunden lang direkt Flammen ausgesetzt werden. Es handelt sich um hochgradig sicherheitsrelevante Themen (sogenannter "thermal runaway" für reine Batteriefahrzeuge oder Hitzethemen bei Hybridfahrzeugen). Die Kunststoffleitungen müssen deshalb mehr und mehr thermisch isoliert werden, was aus Sicht der Kosten, des Gewichts und des Bauraums diverse Nachteile bringt.

Der Erfindung liegt die Aufgabe zugrunde, ein modular aufgebautes Kühlleitungssystem, insbesondere für Batterien von E-Fahrzeugen, anzugeben, welches sich durch erhöhte Feuerbeständigkeit auszeichnet und zudem leicht an unterschiedliche (geometrische) Anforderungen anpassbar ist, sodass eine weitreichende Skalierbarkeit erreicht wird. Außerdem soll sich das vorgeschlagene Kühlleitungssystem durch eine vereinfachte und gegebenenfalls automatisierbare Montage auszeichnen.

Diese Aufgabe wird erfindungsgemäß gelöst durch ein modular aufgebautes Kühlleitungssystem mit den Merkmalen des Patentanspruchs 1. Vorteilhafte Weiterbildungen der grundlegenden erfindungsgemäßen Idee sind in den Unteransprüchen definiert.

Erfindungsgemäß umfasst ein modular aufgebautes Kühlleitungssystem, insbesondere für Batterien von E-Fahrzeugen, wenigstens ein rohrförmiges Verbindungselement, welches Verbindungselement gerade oder gebogen ausgebildet sein kann, aus einem ersten Metall; und wenigstens zwei rohrförmige oder schlauchförmige Leitungselemente aus einem zweiten Metall, welche Leitungselemente mittels des Verbindungselements verbunden oder verbindbar sind, oder wenigstens ein solches Leitungselement, das mittels des Verbindungselements mit einem zu kühlenden Funktionsmodul, vorzugsweise einer Batterie, verbindbar ist.

Vorzugsweise umfasst das Kühlleitungssystem - bei entsprechender Weiterbildung - eine Vielzahl von Leitungselementen sowie eine Vielzahl von Verbindungselementen, sodass auch komplexe geometrische Anordnungen realisierbar sind. Konkrete Beispiele sind weiter unten in der Figurenbeschreibung dargestellt.

Es ist im Rahmen der vorliegenden Erfindung nicht zwingend erforderlich, dass es sich bei dem ersten Metall und bei dem zweiten Metall um verschiedene Metalle handelt. Beispielsweise kann es sich in beiden Fällen um Edelstahl oder um Aluminium handeln. Besonders vorteilhaft sind aber sog. Hybridlösungen, bei denen das Verbindungselement beispielsweise aus Aluminium und das Leitungselement bzw. die Leitungselemente aus Stahl, vorzugsweise Edelstahl, bestehen. In allen diesen Fällen lässt sich eine ausreichende Feuerbeständigkeit erreichen, wobei zusätzlich aufgrund der gegenüber Kunststoff deutlich geringeren Wandstärke, insbesondere bei Leitungselementen aus dünnwandigem Edelstahl, sehr leichte und platzsparende Bauweisen möglich sind.

Insbesondere bei dem Leitungselement bzw. den Leitungselementen kann es sich um (ring-) gewellte Schläuche, Bälge oder auch glatte (Biege-)Rohre handeln, je nach Anforderung und gegebenenfalls auch in beliebiger Kombination.

Zentrales Element des modularen Aufbaus ist das bereits genannte Verbindungselement, welches vorzugsweise nach Art eines T-Stücks ausgebildet sein kann, ohne dass die Erfindung allerdings hierauf beschränkt wäre. Ein solches Verbindungselement kann dazu dienen, zwei Leitungselemente fluidleitend miteinander zu verbinden. Zudem kann über den (wenigstens einen) T-Abzweig noch ein weiteres (drittes) Leitungselement fluidleitend angeschlossen werden.

Alternativ kann das Verbindungselement jedoch auch ohne Abzweig(e) ausgebildet sein und ist zudem nicht auf gerade Ausgestaltungen beschränkt. Als besonders vorteilhaft hat es sich erwiesen, wenn das Verbindungselement gebogen ausgebildet ist, insbesondere mit einem Biegewinkel von etwa 90°, wobei es vorzugsweise dazu dient, ein Leitungselement der genannten Art direkt mit einem zu kühlenden Funktionsmodul, wie einer Batterie, zu verbinden. Im Zuge dieser Ausgestaltung kann das Verbindungselement an einem (Anschluss-)Ende einen genormten Standard-Anschluss aufweisen, insbesondere vom Typ SAE oder VDA, ohne dass die Erfindung diesbezüglich beschränkt wäre.

Die fluidleitende Anbindung des Leitungselements bzw. der Leitungselemente an das Verbindungselement kann stoffschlüssig, insbesondere durch Löten, Schweißen oder Kleben, kraftschlüssig (beispielsweise durch Verpressen) oder über eine mechanische Verbindung (Formschluss) hergestellt werden.

Sofern das Verbindungselement als T-Stück ausgebildet ist, kann der genannte Abzweig insbesondere als Aushalsung oder Auslochung hergestellt sein. Die Erfindung ist jedoch - wie erwähnt - nicht auf Verbindungselemente mit einer einzigen Abzweigung beschränkt; vielmehr können auch mehrere Abzweigungen vorhanden sein, die an unterschiedlichen axialen und/oder umfänglichen Positionen angeordnet sein können.

Im Bereich von Anschlussenden des Verbindungselements können für erhöhte Dichtigkeitsanforderungen zusätzliche Anschlussteile (Hülsen) vorgesehen sein, die vorzugsweise tiefgezogen (ohne Schweißnaht) ausgebildet sind.

Aufgrund des modularen Aufbaus ist das vorgeschlagene Kühlleitungssystem quasi beliebig skalierbar in Bezug auf Stückzahlen, Durchmesser, Längen, Abgänge, Flexibilität (insbesondere der Leitungselemente), usw.

Folgende Weiterbildungen des erfindungsgemäßen Kühlleitungssystems haben sich als besonders vorteilhaft erwiesen, wobei vor einiger Ausgestaltungen weiter oben bereits kurz hingewiesen wurde:
Bei einer ersten Weiterbildung des erfindungsgemäßen Kühlleitungssystems kann vorgesehen sein, dass das Verbindungselement ein erstes Anschlussende und ein zweites Anschlussende aufweist, welche Anschlussenden zum Verbinden mit jeweils einem der Leitungselemente oder mit dem Leitungselement ausgebildet und vorgesehen sind, und bei dem das Verbindungselement zwischen den Anschlussenden wenigstens einen Abzweig aufweist, an welchen Abzweig ein weiteres Leitungselement aus einem Metall angeschlossen oder anschließbar ist. Hierauf wurde weiter oben bereits hingewiesen. Der Einsatz derartiger Verbindungselemente ermöglicht den Aufbau verzweigter Leitungssysteme, wobei insbesondere vorgesehen sein kann, dass mehrere Abzweige vorhanden sind, die in verschiedenen Richtungen und/oder bei unterschiedlichen axialen Positionen von dem Verbindungselement abgehen.

Es hat sich fertigungstechnisch als besonders vorteilhaft erwiesen, wenn bei einer anderen Weiterbildung des erfindungsgemäßen Kühlleitungssystems der/die Abzweig/e als Aushalsung/en oder Auslochung/en ausgebildet ist/sind.

Eine wieder andere Weiterbildung des erfindungsgemäßen Kühlleitungssystems sieht vor, dass an dem (wenigstens einen) Abzweig ein Anschlussteil für das weitere Leitungselement angeordnet ist, vorzugsweise stoffschlüssig angebunden, welches Anschlussteil vorzugsweise entsprechend dem ersten Anschlussende oder dem zweiten Anschlussende ausgebildet ist. Es wurde bereits darauf hingewiesen, dass ein solches Anschlussteil vorzugsweise als Tiefziehteil ohne Schweißnaht oder dergleichen ausgebildet sein kann, um erhöhte Dichtigkeitsanforderungen zu erfüllen.

Wenn das Verbindungselement als T-Stück ausgebildet ist, kann es mit bis zu drei Leitungselementen fluidleitend verbunden werden. Die Leitungselemente können in gleicher Weise oder auf unterschiedliche Weisen angebunden sein, bevorzugt eingepresst und stoffschlüssig angebunden, insbesondere verlötet, um eine ausreichende mechanische Sicherheit und eine hinreichende Fluid-Dichtheit zu erreichen.

Bei wieder einer anderen Weiterbildung des erfindungsgemäßen Kühlleitungssystems kann vorgesehen sein, dass das Verbindungselement an wenigstens einem der Anschlussenden aufgeweitet ist und wenigstens eines der Leitungselemente oder das Leitungselement in das aufgeweitete Anschlussende eingeschoben oder einschiebbar ist, bevorzugt eingepresst oder einpressbar.

Zusätzlich kann in diesem Bereich noch eine stoffschlüssige Anbindung erfolgen, insbesondere durch Löten, wie vorstehend bereits angesprochen. Eine entsprechende Weiterbildung des erfindungsgemäßen Kühlleitungssystems sieht deshalb vor, dass das wenigstens eine der Leitungselemente oder das Leitungselement in dem aufgeweiteten Anschlussende stoffschlüssig fixiert oder fixierbar ist, vorzugsweise verlötet oder verlötbar.

Als besonders vorteilhaft hat es sich erwiesen, wenn bei wieder einer anderen Weiterbildung des erfindungsgemäßen Kühlleitungssystems wenigstens eines der Leitungselemente oder das Leitungselement als Wellschlauchabschnitt ausgebildet ist oder zumindest einen Wellschlauchabschnitt aufweist. Auf diese Weise sind die Leitungselemente ausreichend flexibel und können auch gewisse Fertigungstoleranzen ausgleichen. Außerdem lassen sich bei einer gewellten Ausgestaltung der Leitungselemente, was vorliegend alle Ausgestaltungen umfasst, bei denen die Leitungselemente wenigstens eine Welle oder eine (umlaufende) radiale Ausbuchtung aufweisen, vielfältige Dicht- und Fixiermöglichkeiten realisieren, worauf nachfolgend noch genauer eingegangen wird.

Eine andere Weiterbildung des erfindungsgemäßen Kühlleitungssystems sieht insbesondere vor, dass an wenigstens einem der Anschlussenden zwischen dem Verbindungselement und wenigstens einem der Leitungselemente oder dem Leitungselement ein Dichtelement, vorzugsweise ein O-Ring, angeordnet oder anortbar ist, welches Dichtelement vorzugsweise zwischen zwei Wellen in dem Wellschlauchabschnitt angeordnet oder anortbar ist. Falls nur eine Welle vorhanden ist, kann sich das Dichtungselementen seitlich an die Flanke dieser einen Welle anschmiegen. Somit ist das Dichtelement in seiner (axialen) Position festgelegt.

Noch eine andere Weiterbildung des erfindungsgemäßen Kühlleitungssystems sieht vor, dass das Verbindungselement an wenigstens einem der Anschlussenden über einen Teilbereich seines Umfangs geschlitzt ausgebildet ist und einen entsprechenden Schlitz (Ausklinkung) aufweist, und bei dem zusätzlich wenigstens ein Fixierelement vorhanden ist, vorzugsweise ein U-förmiges Federelement, welches Fixierelement in den Schlitz sowie über einen Teilumfang des Leitungselements zwischen zwei Wellen in dem Wellschlauchabschnitt eingeschoben oder einschiebbar ist, um das betreffende Leitungselement formschlüssig an dem Verbindungselement zu fixieren. Wenn nur eine Welle vorhanden ist, kann das Fixierelement in einer Auszugsrichtung hinter dieser einen Welle angeordnet sein. Auf diese Weise ergibt sich eine einfache, insbesondere auch leicht automatisierbare Verbindungsmöglichkeit.

Wieder eine andere Weiterbildung des erfindungsgemäßen Kühlleitungssystems versieht dieses mit einem zusätzlichen Schellenelement, welches Schellenelement dazu ausgebildet ist, das Verbindungselement und das wenigstens eine der Leitungselemente oder das Leitungselement an dem wenigstens einen Anschlussende im Bereich des Dichtelements, einer Welle des Leitungselements und einer endständigen Aufweitung des Verbindungselements formschlüssig von außen zu übergreifen. Auch auf diese Weise ergibt sich eine einfache, leicht zu automatisierende Verbindungsmöglichkeit.

Alternativ besteht bei einer Weiterbildung des erfindungsgemäßen Kühlleitungssystems auch die Möglichkeit, dieses mit einem zusätzlichen Clipelement auszustatten, welches Clipelement einen vorzugsweise U-förmigen Grundkörper aufweist, mit dem es auf das Verbindungselement oder auf eines der Leitungselemente oder das Leitungselement aufgeschoben oder aufschiebbar ist, vorzugsweise benachbart einer betreffenden radialen Aufweitung. Das Clipelement weist außerdem wenigstens einen an den Grundkörper angeformten, vorzugsweise U-förmigen Haltebügel auf, welcher Haltebügel in einer Auszugsrichtung hinter eine betreffende radiale Aufweitung an dem anderen der beiden Elemente Verbindungselement und Leitungselement gegenüber dem Grundkörper verschwenkbar ist, um das betreffende Leitungselement formschlüssig an dem Verbindungselement zu fixieren. Wiederum ergibt sich eine einfache und leicht zu automatisieren Verbindungsmöglichkeit.

Als besonders vorteilhaft hat es sich erwiesen, wenn bei einer Weiterbildung des erfindungsgemäßen Kühlleitungssystems das erste und das zweite Anschlussende verschieden ausgebildet sind. Dadurch erhöhen sich die modularen Verbindungsmöglichkeiten. Es wurde bereits darauf hingewiesen, dass insbesondere ein Anschlussende einen genormten Anschluss-Typ aufweisen kann. Alternativ besteht jedoch auch die Möglichkeit, das erste und das zweite Anschlussende gleichartig auszubilden, um insbesondere auf beiden Seiten das Verbindungselement mit gleichen oder identischen Leitungselementen verbinden zu können. Gleiches trifft auch auf den/die Abzweig/e zu.

Eine besonders vorteilhafte Ausgestaltung des erfindungsgemäßen Kühlleitungssystems lässt sich dadurch erreichen, wenn das Verbindungselement und das/die Leitungselement/e aus verschiedenen Werkstoffen hergestellt sind, insbesondere wenn das erste Metall Aluminium und das zweite Edelstahl ist. Hierdurch erhöht sich die Verwendungsflexibilität noch weiter. Alternativ besteht jedoch die Möglichkeit, alle genannten Elemente in ein und demselben Werkstoff auszubilden, beispielsweise Edelstahl oder Aluminium.

Es wurde bereits darauf hingewiesen, dass das Verbindungselement besonders flexibel einsetzbar ist, wenn eine Mehrzahl von Abzweigen vorhanden ist, vorzugsweise bei verschiedenen Umfangspositionen.

Dabei kann sowohl vorgesehen sein, dass das Verbindungselement gerade ausgebildet ist, als auch dass das Verbindungselement gebogen ausgebildet ist.

Insbesondere wenn das Verbindungselement gebogen ausgebildet ist, kann vorgesehen sein, dass es auf einer Seite (an einem Anschlussende) einen genormten Standard-Anschluss aufweist, vorzugsweise vom Typ VDA oder SAE. Dieses Merkmal ist jedoch keinesfalls auf gebogene Verbindungselemente beschränkt.

Bei einer anderen Weiterbildung des erfindungsgemäßen Kühlleitungssystems kann vorgesehen sein, dass mehrere Verbindungselemente benachbart angeordnet sind, vorzugsweise parallel zueinander, und bei dem zwischen wenigstens zwei Verbindungselementen zumindest ein Abstandhalter angeordnet ist. Neben der bloßen Beabstandung der Verbindungselemente kann der Abstandhalter eine Reihe von Zusatzfunktionen ausbilden.

Diese Zusatzfunktionen umfassen insbesondere eine Montage-, Verdreh- und Positionierhilfe, eine Kombination von Schelle/Clip und Abstandhalter zu einem Bauteil (Reduzierung der Einzelteile), eine zusätzliche tragende Struktur für die Batterie, Befestigungsmöglichkeiten für Sensoren und Kabeln, Schwingungsentkopplung, z.B. durch Einsatz geeigneter Materialien oder Geometrien (z.B. gewellt) oder durch Einsatz zusätzlicher Drahtpressringe zwischen Abstandshalter und den Leitungselementen (Verbindungselementen).

Der Abstandhalter kann stoffschlüssig an die Verbindungselemente angebunden sein, insbesondere angeschweißt oder angelötet; vorzugsweise ist er allerdings nur mittels Formschluss an den Verbindungselementen befestigt.

Weitere Eigenschaften und Vorteile der Erfindung ergeben sich aus der nachfolgenden Beschreibung von Ausführungsbeispielen anhand der Zeichnung.
Figur 1 zeigt eine Ausgestaltung des erfindungsgemäßen Kühlleitungssystems im Längsschnitt;
Figur 2 zeigt eine weitere Ausgestaltung des erfindungsgemäßen Kühlleitungssystems im Längsschnitt;
Figur 3 zeigt noch eine weitere Ausgestaltung des erfindungsgemäßen Kühlleitungssystems im Längsschnitt;
Figur 4 zeigt im Längsschnitt die Verbindung zwischen einem Verbindungselement und einem Leitungselement bei einer Ausgestaltung des erfindungsgemäßen Kühlleitungssystems;
Figur 5 zeigt im Längsschnitt die Verbindung zwischen einem Verbindungselement und einem Leitungselement bei einer anderen Ausgestaltung des erfindungsgemäßen Kühlleitungssystems;
Figur 6 zeigt mehrere Ansichten eines Verbindungselements für ein erfindungsgemäßes Kühlleitungssystem;
Figur 7 zeigt Ansichten eines weiteren Verbindungselements für ein erfindungsgemäßes Kühlleitungssystem;
Figur 8 zeigt mehrere Ansichten der Verbindung zwischen einem Verbindungselement und einem Leitungselement bei einer Ausgestaltung des erfindungsgemäßen Kühlleitungssystems;
Figur 9 zeigt teilweise und im Längsschnitt eine Ansicht einer anderen Verbindung zwischen einem Verbindungselement und einem Leitungselement bei einer Ausgestaltung des erfindungsgemäßen Kühlleitungssystems;
Figur 10 zeigt eine Ansicht noch eines weiteren Verbindungselements für ein erfindungsgemäßes Kühlleitungssystem; und
Figur 11 zeigt eine Gesamtansicht eines erfindungsgemäß realisierbaren Kühlleitungssystems.

In den Figuren bezeichnen gleiche Bezugszeichen gleiche oder zumindest gleich wirkende Elemente.

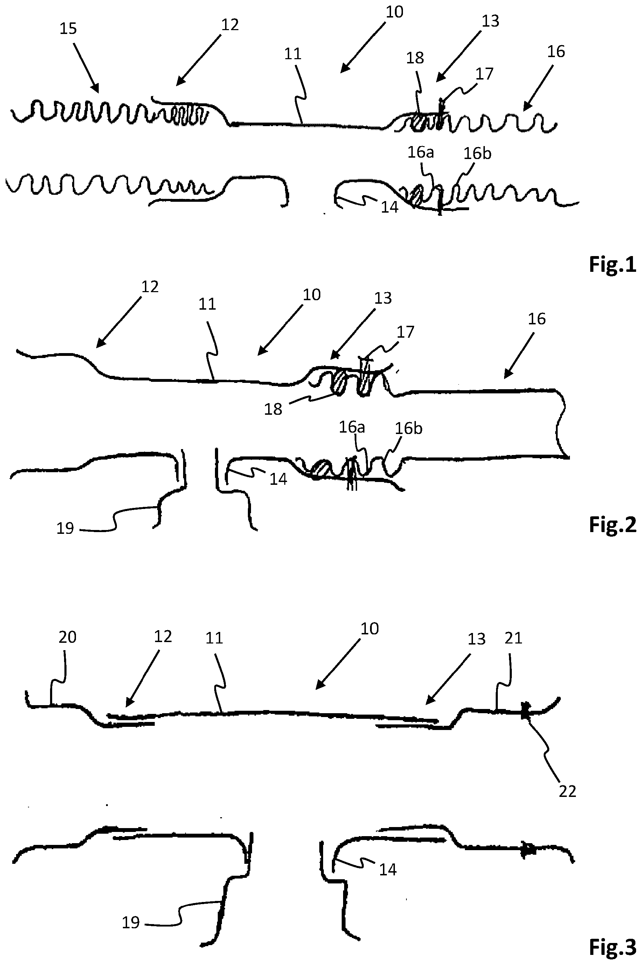

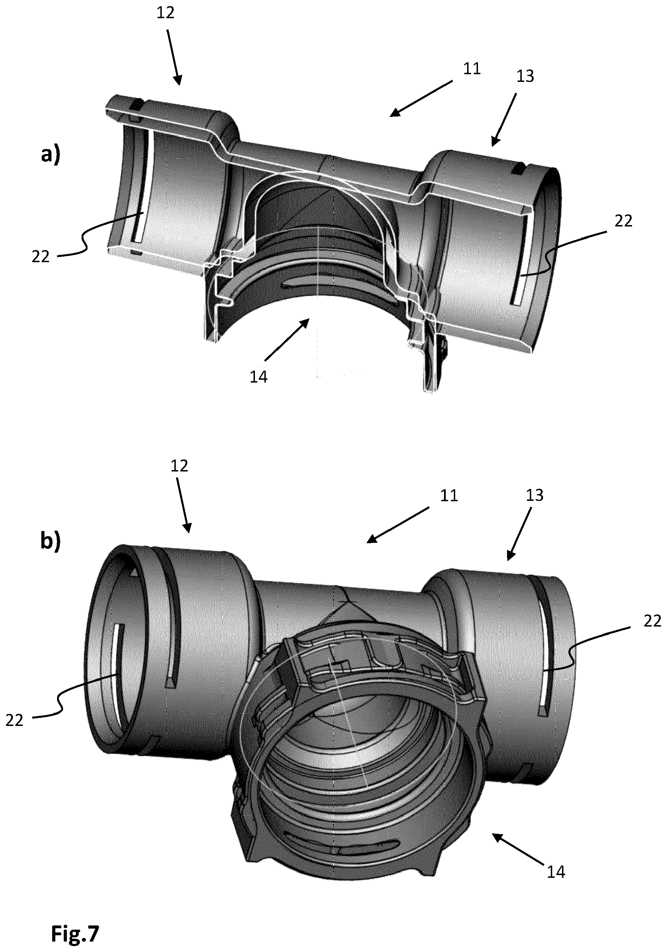

In Figur 1 ist eine Ausgestaltung des erfindungsgemäßen Kühlleitungssystems 10 im Längsschnitt schematisch dargestellt. Das Kühlleitungssystem 10 umfasst ein T-förmig ausgebildetes, rohrförmiges Verbindungselement 11 aus einem metallischen Werkstoff, beispielsweise Aluminium oder Edelstahl, mit zwei fluchtenden Anschlussenden 12, 13 und einem dazwischen angeordneten Abzweig 14, der vorliegend als Aushalsung ausgebildet ist. Im Bereich der Anschlussenden 12, 13 ist das Verbindungselement aufgeweitet. In die Anschlussenden 12, 13 ist jeweils ein schlauchförmiges Leitungselement 15 bzw. 16 eingeführt, welches Leitungselement 15, 16 nach Art eines Ringwellschlauchs ausgebildet ist. Links in Figur 1 ist der Ringwellschlauch 15 in das Anschlussende 12 eingepresst und dort kraftschlüssig gehalten. Zusätzlich kann eine Lötverbindung vorgesehen sein, was jedoch in Figur 1 nicht dargestellt ist. Rechts in Figur 1 ist der Ringwellschlauch 16 in dem Anschlussende 13 formschlüssig gehalten, zu welchem Zweck ein Federelement 17 vorhanden ist, welches in einen Bereich zwischen zwei Wellen 16a, 16b des Leitungselements 16 eingreift und als Fixierelement wirkt. Das Verbindungselement 11 ist vorzugsweise zu diesem Zweck geeignet ausgeklinkt bzw. weist einen Durchbruch (Ausklinkung) zum Einführen des Fixier-/Federelements 17 auf. Auf Einzelheiten dieser Verbindung wird weiter unten insbesondere anhand von Figur 7 noch genauer eingegangen. Zum Abdichten der Verbindung ist rechts in Figur 1 noch ein Dichtelement in Form eines O-Rings 18 vorgesehen, der ebenfalls zwischen zwei Wellen (nicht bezeichnet) des Leitungselements 16 angeordnet ist.

In Figur 2 ist eine weitere Ausgestaltung des erfindungsgemäßen Kühlleitungssystems 10 im Längsschnitt schematisch dargestellt. Vorliegend ist nur ein einzelnes Leitungselement bei Bezugszeichen 16 dargestellt, welches nach Art eines Glattrohrs ausgebildet ist, das lediglich endständig eine Anzahl von Wellen 16a, 16b (nicht alle bezeichnet) aufweist (sog. Enden-Umformung). Alternativ kann das Leitungselement 16 auch als Balg, Biegerohr oder dergleichen ausgebildet sein. Die Verbindung mit dem Verbindungselement 11 erfolgt dergestalt, wie weiter oben anhand von Figur 1 bereits beschrieben.

Im Bereich des Abzweig 14 ist ein tiefgezogenes Anschlussteil 19 für ein weiteres (nicht gezeigtes) Leitungselement angeordnet, um in diesem Bereich ein weiteres Rohr- oder Schlauchteil anschließen zu können. Vorzugsweise ist das Anschlussteil 19 stoffschlüssig mit dem Verbindungselement 11 verbunden.

In Figur 3 ist noch eine weitere Ausgestaltung des erfindungsgemäßen Kühlleitungssystems 10 schematisch im Längsschnitt gezeigt. Anstelle der in den Figuren 1 und 2 gezeigten aufgeweiteten Anschlussenden weist das Verbindungselement 11 gemäß Figur 3 nicht nur an der Abzweigung 14, sondern auch an seinen Anschlussenden 12, 13 tiefgezogene, aufgeweitete Hülsen bzw. Anschlussteile 20, 21 auf, welche bevorzugt stoffschlüssig angebunden sind und zum Verbinden mit (hier nicht gezeigten) Leitungselementen dienen.

Bei Bezugszeichen 22 kann das Anschlussteil 21 eine Ausklinkung (einen Schlitz) aufweisen, durch die ein Federelement zum Fixieren eines (gewellten) Leitungselements einführbar ist. Hierauf wurde weiter oben bereits hingewiesen.

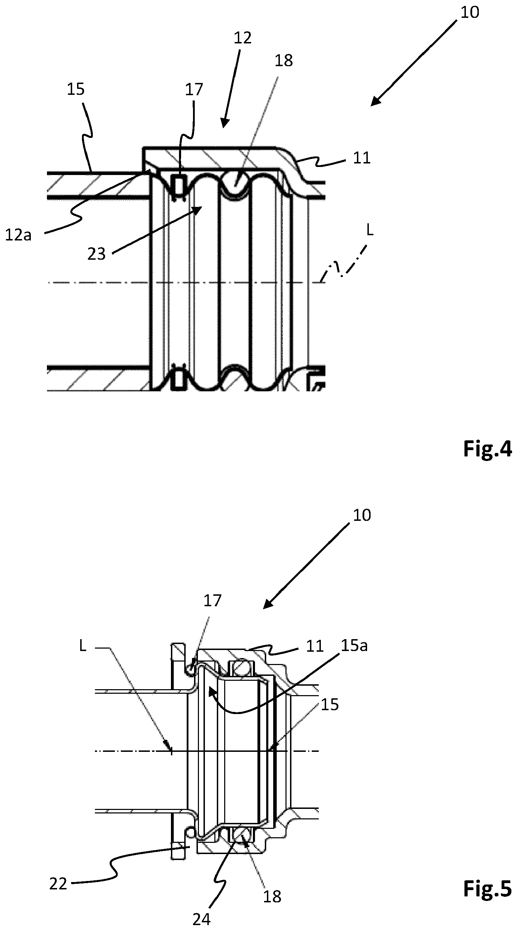

In Figur 4 ist im Längsschnitt in Detail wie eine mögliche Verbindung zwischen einem Verbindungselement 11 mit aufgeweitetem Anschlussende 12 und einem Leitungselement 15 gezeigt, welches Leitungselement 15 endständig einen gewellten Bereich oder Wellschlauchabschnitt 23 aufweist. Das Verbindungselement 11 übergreift den Wellschlauchabschnitt 23 mit seinem Anschlussende 12; dazwischen ist wiederum ein Dichtelement in Form eines O-Rings 18 angeordnet. Bezugszeichen 17 bezeichnet wiederum ein Federelement, das verhindert, dass das Verbindungselement 11 von dem Wellschlauchabschnitt 23 abgezogen werden kann. Diesem Zweck weist das Verbindungselement 11 endständig an seinem Anschlussende 12 einen radial nach innen gerichteten Steg 12a auf, über den das Verbindungselement 11 gegebenenfalls mit dem Federelement 17 zusammenwirkt.

Bezugszeichen L bezeichnet die Längsachse der Anordnung.

In Figur 5 ist eine alternative Ausgestaltung der Verbindung zwischen einem Verbindungselement 11 und einem Leitungselement 15 gezeigt. Das Leitungselement 15 weist eine einzelne, im Querschnitt asymmetrische Welle 15a auf, die von den endständig aufgeweiteten Verbindungselement 11 übergriffen wird. Das Verbindungselement 11 weist eine umfänglich umlaufende Nut 24 an seiner Innenseite auf, in der ein Dichtelement in Form eines O-Rings 18 gehalten ist. Das Dichtelement 18 wirkt mit einer parallel zur Längsachse L ausgebildeten Dichtfläche am freien Ende des Leitungselements 15 dichtend zusammen. Zum Sichern der Verbindung weist das Verbindungselement 11 wiederum eine Ausklinkung 22 auf, in die ein Federelement 17 (Federbügel) eingesetzt ist, welches formschlüssig mit der Welle 15a zusammenwirkt, wie dargestellt.

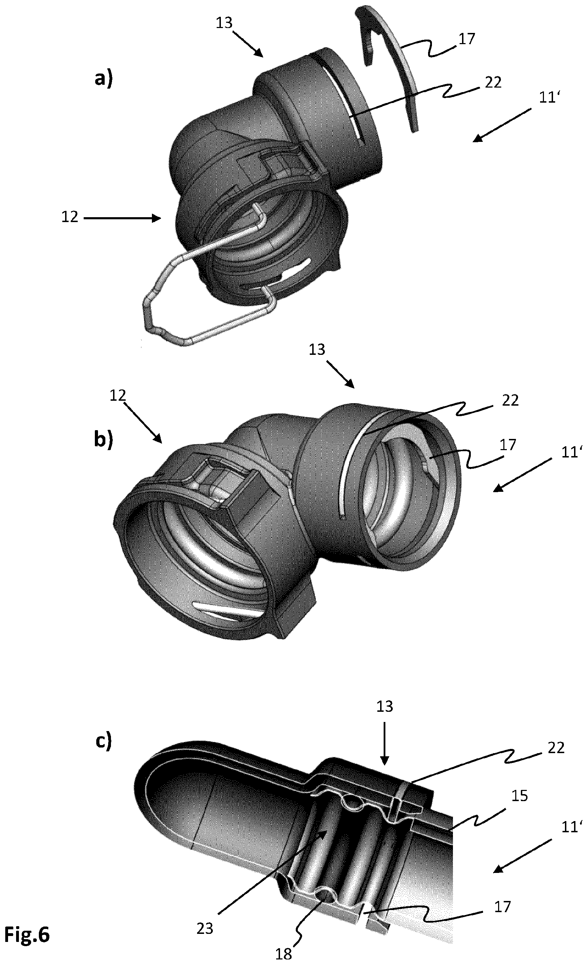

Figur 6 zeigt in mehreren Teilabbildungen a) bis c) verschiedene Ansichten eines gebogen bzw. mit einer Abwinkelung von 90° ausgestalteten Verbindungselements 11'. An seinem rechten Anschlussende 13, welches wiederum aufgeweitet ausgebildet ist, ist das Verbindungselement' 11' so ausgebildet, wie weiter oben anhand der Figuren 1 und 2 bereits beschrieben. Gut erkennbar ist die Ausklinkung 22, durch die ein etwa U-förmiges Federelement 17 einführbar ist. In Teilabbildung a) sind die genannten Elemente getrennt voneinander dargestellt; in Teilabbildung b) ist das Federelement 17 in die Ausklinkung 22 eingeführt. In Teilabbildung c) ist die Verbindung mit einem endständig gewellten Leitungselement 15 gezeigt, wie weiter oben anhand von Figur 4 bereits beschrieben.

An dem anderen Anschlussende 12 ist das Verbindungselement 11' vorzugsweise genormt bzw. standardisiert ausgebildet, um ein nicht gezeigtes weiteres Leitungselement oder unmittelbar einen (nicht gezeigten) Anschlussstutzen eines zu kühlenden Funktionsmodul, wie einer Batterie eines E-Fahrzeugs, anschließen zu können.

Figur 7 zeigt in zwei Teilabbildungen a) und b) ein als T-Stück ausgebildetes Verbindungselement 11, dessen rechte und linke Anschlussenden 12, 13 so ausgebildet sind, wie in Figur 6 für das Anschlussende 13 beschrieben wurde. Im Bereich des unteren Abzweig 14 kann das Verbindungselement 11 dagegen in etwa so ausgebildet sein, wie in Figur 6 für das dortige (untere) Anschlussende 12 gezeigt und beschrieben wurde. Wie ein zusätzlicher Vergleich mit der Ausgestaltung in Figur 5 zeigt, entspricht die genannte Ausgestaltung im Bereich des Anschlussendes 12 (in Figur 6) bzw. des Abzweigs 14 (Figur 7) darüber hinaus im Wesentlichen der unter Bezugnahme auf Figur 5 beschriebenen Ausgestaltung des dort gezeigten Verbindungselements 11.

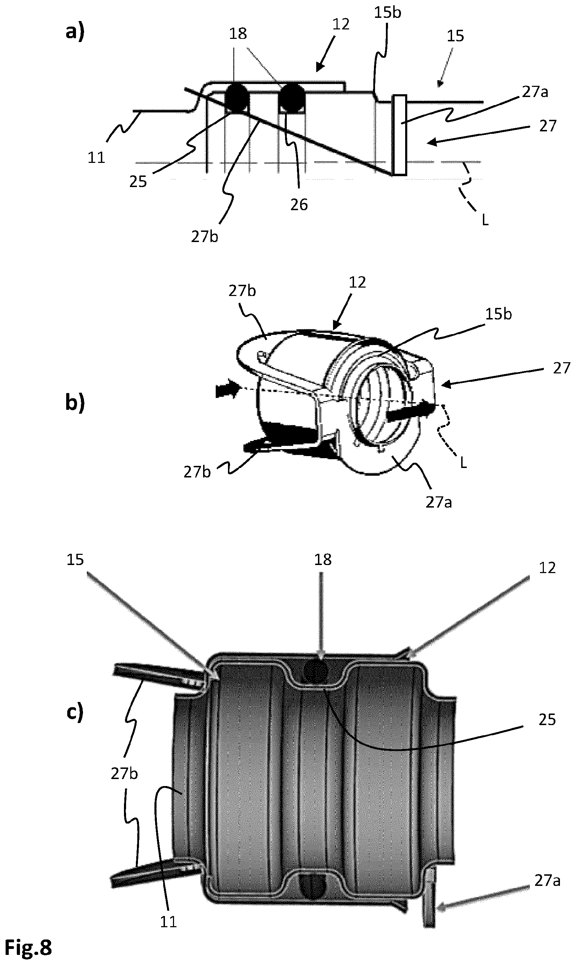

Figur 8 zeigt in mehreren Teilabbildungen a) bis c) noch eine alternative Ausgestaltung der Verbindung zwischen einem Verbindungselement 11 und einem Leitungselement 15.

Gemäß Figur 8, Teilabbildung a), weist das Leitungselement 15 endständig einen gewellten Bereich bzw. zwei Nuten 25, 26 auf, in die jeweils ein Dichtelement in Form eines O-Rings 18 eingesetzt ist. Das Verbindungselement 11 übergreift diesen Bereich mit seinem aufgeweitetem Anschlussende 12. An dem Leitungselement 15 ist ein zusätzliches Clipelement 27 angeordnet, welches Clipelement 27 einen U-Förmigen Grundkörper 27a aufweist, mit dem es auf das Leitungselement 15 aufgeschoben ist, vorzugsweise an oder benachbart einer betreffenden radialen Aufweitung (Schulter) 15b. Das Clipelement 27 weist außerdem zwei an den Grundkörper 27a angeformte, in der Draufsicht U-förmige Haltebügel 27b auf, welche Haltebügel 27b in einer Auszugsrichtung hinter eine betreffende radiale Aufweitung (Übergang zu der Aufweitung 12) an dem Verbindungselement 11 gegenüber dem Grundkörper 27a verschwenkt sind, um das Leitungselement 15 formschlüssig an dem Verbindungselement 11 zu fixieren.

In Teilabbildung 8c) ist eine leicht abgewandelte Ausgestaltung gezeigt, bei der das Leitungselement 15 nur eine Nut 25 und entsprechend nur einen O-Ring 18 aufweist.

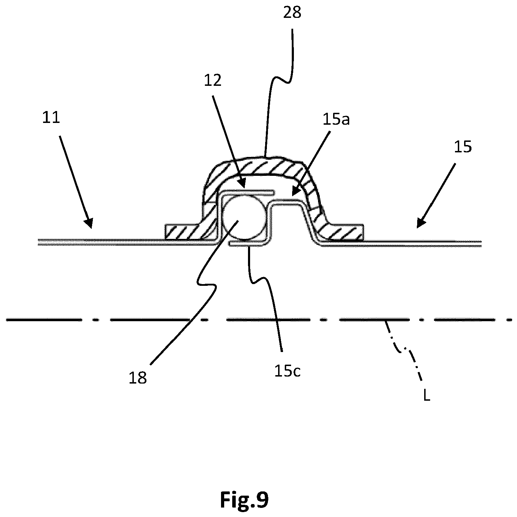

Figur 9 zeigt noch eine andere Möglichkeit der Verbindung zwischen Verbindungselement 11 und einem Leitungselement 15 unter Verwendung eines O-Rings 18 und einer (äußeren) Schelle (Schellenelement) 28. Das Schellenelement 28 ist dazu ausgebildet, das Verbindungselement 11 und Leitungselement 15 an dem aufgeweiteten Anschlussende 12 des Verbindungselements 11 im Bereich des Dichtelements 18 und einer (einzelnen) endständigen Welle 15a des Leitungselements 15 formschlüssig von außen zu übergreifen, wie dargestellt. Das Dichtelement 18 ist zwischen dem aufgeweiteten Anschlussende 12 des Verbindungselements 11 und einem glattzylindrischen, freien Ende 15c des Leitungselements 15 aufgenommen. Die Welle 15a kann wiederum asymmetrisch ausgebildet sein, wie dargestellt.

Grundsätzlich können alle vorstehend erläuterten und in den Patentansprüchen definierten Verbindungen zwischen Verbindungselementen 11 und Leitungselementen 15, 16 im Rahmen der vorliegenden Erfindung beliebig miteinander kombiniert werden.

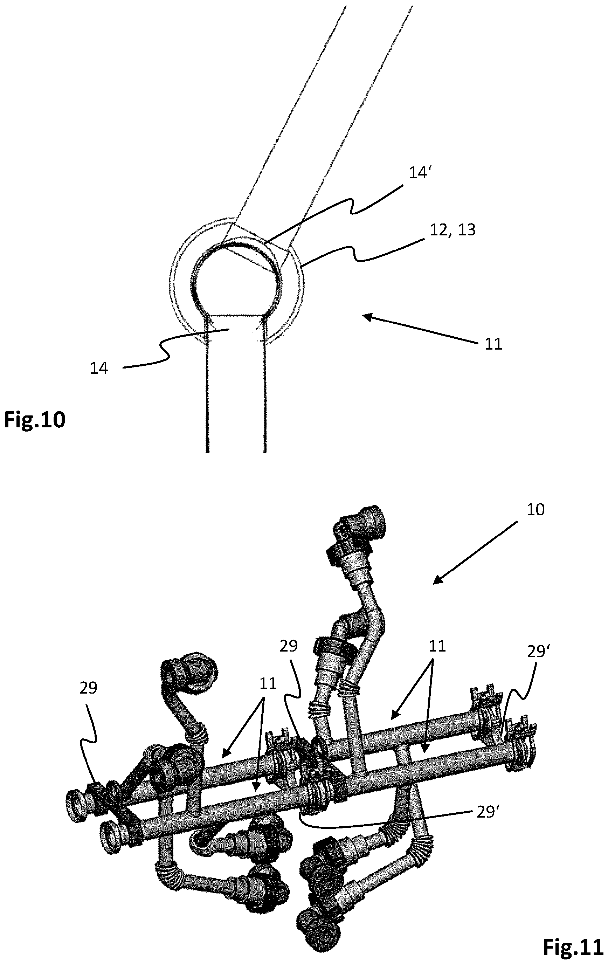

In Figur 10 ist mit Blickrichtung entlang der Längsachse dargestellt, dass ein Verbindungselement 11 mehrere Abzweige 14, 14' aufweisen kann, die bei verschiedenen Umfangspositionen von dem Verbindungselement 11 abgehen können. Die Erfindung ist hinsichtlich der Anzahl bzw. Richtungen der Abzweige 14, 14' grundsätzlich nicht beschränkt.

Schließlich ist in Figur 11 nochmals insgesamt ein modular aufgebautes Kühlleitungssystem 10 dargestellt, wie es im Rahmen der vorliegenden Erfindung mit den beschriebenen Komponenten realisierbar ist.

Figur 11 zeigt außerdem zwei Arten von zusätzlichen Abstandhaltern 29, 29', die zwischen den Leitungselementen (Verbindungselementen) 11 angeordnet sind, durch welche Abstandhalter 29, 29' - neben der bloßen Beabstandung der Verbindungselemente 11 - eine Reihe von Zusatzfunktionen realisierbar sind.

Diese Zusatzfunktionen umfassen insbesondere eine Montage-, Verdreh- und Positionierhilfe, eine Kombination von Schelle/Clip und Abstandhalter zu einem Bauteil (Reduzierung der Einzelteile), eine zusätzliche tragende Struktur für die Batterie, Befestigungsmöglichkeiten für Sensoren und Kabeln, Schwingungsentkopplung, z.B. durch Einsatz geeigneter Materialien oder Geometrien (z.B. gewellt) oder durch Einsatz zusätzlicher Drahtpressringe zwischen Abstandshalter 29, 29' und den Leitungselementen (Verbindungselementen) 11.

Die Abstandhalter 29, 29' können an die Verbindungselemente 11 angeschweißt oder angelötet sein; vorzugsweise sind sie allerdings nur mittels Formschluss an den Verbindungselementen 11 befestigt.

## Patentansprüche

1. Modular aufgebautes Kühlleitungssystem (10), insbesondere für Batterien von E-Fahrzeugen, umfassend:
wenigstens ein rohrförmiges Verbindungselement (11) aus einem ersten Metall; und
wenigstens zwei rohrförmige oder schlauchförmige Leitungselemente (15, 16) aus einem zweiten Metall, welche Leitungselemente (15, 16) mittels des Verbindungselements (11) verbunden oder verbindbar sind, oder wenigstens ein solches Leitungselement (15, 16), das mittels des Verbindungselements (11) mit einem zu kühlenden Funktionsmodul, vorzugsweise einer Batterie, verbindbar ist.

2. Kühlleitungssystem (10) nach Anspruch 1,
bei dem das Verbindungselement (10) ein erstes Anschlussende (12) und ein zweites Anschlussende (13) aufweist, welche Anschlussenden (12, 13) zum Verbinden mit jeweils einem der Leitungselemente (15, 16) oder mit dem Leitungselement (15, 16) ausgebildet und vorgesehen sind, und bei dem das Verbindungselement (11) zwischen den Anschlussenden (12, 13) wenigstens einen Abzweig (14, 14') aufweist, an welchen Abzweig (14, 14') ein weiteres Leitungselement aus einem Metall angeschlossen oder anschließbar ist,
wobei der Abzweig (14, 14') insbesondere als Aushalsung oder Auslochung ausgebildet ist,
und/oder wobei an dem Abzweig (14) vorzugsweise ein Anschlussteil (19) für das weitere Leitungselement angeordnet ist, vorzugsweise stoffschlüssig angebunden, welches Anschlussteil (19) vorzugsweise entsprechend dem ersten Anschlussende (12) oder dem zweiten Anschlussende (13) ausgebildet ist.

3. Kühlleitungssystem (10) nach einem der Ansprüche 1 oder 2,
bei dem das Verbindungselement (11) an wenigstens einem der Anschlussenden (12, 13) aufgeweitet ist und wenigstens eines der Leitungselemente (15, 16) oder das Leitungselement (15, 16) in das aufgeweitete Anschlussende (12, 13) eingeschoben oder einschiebbar ist, bevorzugt eingepresst oder einpressbar,
wobei das wenigstens eine der Leitungselemente (15, 16) oder das Leitungselement (15, 16) in dem aufgeweiteten Anschlussende /12, 13) insbesondere stoffschlüssig fixiert oder fixierbar ist, vorzugsweise verlötet oder verlötbar.

4. Kühlleitungssystem (10) nach einem der Ansprüche 1 bis 3,
bei dem wenigstens eines der Leitungselemente (15, 16) oder das Leitungselement (15, 16) als Wellschlauchabschnitt (23) ausgebildet ist oder einen Wellschlauchabschnitt (23) aufweist.

5. Kühlleitungssystem (10) nach einem der Ansprüche 1 bis 4,
bei dem an wenigstens einem der Anschlussenden (12, 13) zwischen dem Verbindungselement (11) und wenigstens einem der Leitungselemente (15, 16) oder dem Leitungselement (15, 16) ein Dichtelement (18), vorzugsweise O-Ring, angeordnet oder anortbar ist, welches Dichtelement (18) vorzugsweise bei Rückbezug auf Anspruch 6 zwischen zwei Wellen (16a, 16b) in dem Wellschlauchabschnitt (23) angeordnet oder anortbar ist.

6. Kühlleitungssystem (10) nach Anspruch 4 oder 5,
bei dem das Verbindungselement (11) an wenigstens einem der Anschlussenden über einen Teilbereich seines Umfangs geschlitzt ausgebildet ist und einen entsprechenden Schlitz oder eine Ausklinkung (22) aufweist, und bei dem zusätzlich wenigstens ein Fixierelement (17) vorhanden ist, vorzugsweise ein U-förmiges Federelement, welches Fixierelement (17) in den Schlitz sowie über einen Teilumfang des Leitungselements zwischen zwei Wellen (16a, 16b) in dem Wellschlauchabschnitt (23) eingeschoben oder einschiebbar ist, um das betreffende Leitungselement (16) formschlüssig an dem Verbindungselement (11) zu fixieren.

7. Kühlleitungssystem (10) nach Anspruch 4 oder 5,
mit einem zusätzlichen Schellenelement (28), welches Schellenelement (28) dazu ausgebildet ist, das Verbindungselement (11) und das wenigstens eine der Leitungselemente (15, 16) oder das Leitungselement (15, 16) an dem wenigstens einen Anschlussende (12, 13) im Bereich des Dichtelements (18), einer Welle (15a) des Leitungselements (15) und einer endständigen Aufweitung (12) des Verbindungselements (11) formschlüssig von außen zu übergreifen.

8. Kühlleitungssystem (10) nach einem der Ansprüche 1 bis 5,
mit einem zusätzlichen Clipelement (27), welches Clipelement (27) einen vorzugsweise U-förmigen Grundkörper (27a) aufweist, mit dem es auf das Verbindungselement (11) oder auf eines der Leitungselemente (15, 16) oder das Leitungselement (15, 16) aufgeschoben oder aufschiebbar ist, vorzugsweise benachbart einer betreffenden radialen Aufweitung (15b), welches Clipelement (27) außerdem wenigstens einen an den Grundkörper (27a) angeformten, vorzugsweise U-förmigen Haltebügel (27b) aufweist, welcher Haltebügel (27b) in einer Auszugsrichtung hinter eine betreffende radiale Aufweitung (12) an dem anderen der beiden Elemente Verbindungselement (11) und Leitungselement (15) gegenüber dem Grundkörper (27a) verschwenkbar ist, um das betreffende Leitungselement (15) formschlüssig an dem Verbindungselement (11) zu fixieren.

9. Kühlleitungssystem (10) nach einem der Ansprüche 1 bis 8,
bei dem das erste und das zweite Anschlussende (12, 13) verschieden ausgebildet sind.

10. Kühlleitungssystem (10) nach einem der Ansprüche 1 bis 9,
bei dem das Verbindungselement (11) und das/die Leitungselement/e (15, 16) aus verschiedenen Werkstoffen hergestellt sind, insbesondere bei dem das erste Metall Aluminium und das zweite Metall Edelstahl ist.

11. Kühlleitungssystem (10) nach einem der Ansprüche 1 bis 10 unter Rückbezug auf Anspruch 2,
bei dem eine Mehrzahl von Abzweigen (14, 14') vorhanden sind, vorzugsweise bei verschiedenen Umfangspositionen.

12. Kühlleitungssystem (10) nach einem der Ansprüche 1 bis 11,
bei dem das Verbindungselement (11) gerade ausgebildet ist.

13. Kühlleitungssystem (10) nach einem der Ansprüche 1 bis 12,
bei dem das Verbindungselement (11) gebogen ausgebildet ist.

14. Kühlleitungssystem (10) nach einem der Ansprüche 1 bis 13,
bei dem das Verbindungselement (11) auf einer Seite einen genormten Standard-Anschluss aufweist, vorzugsweise vom Typ VDA oder SAE.

15. Kühlleitungssystem (10) nach einem der Ansprüche 1 bis 14,
bei dem mehrere Verbindungselemente (11) benachbart angeordnet sind, vorzugsweise parallel zueinander, und bei dem zwischen wenigstens zwei Verbindungselementen (11) zumindest ein Abstandhalter (29, 29') angeordnet ist.
